# FASCICULE DE BREVET EUROPEEN

(11) **EP 3 152 012 B1**
(45) Date de publication et mention de la délivrance du brevet: **07.03.2018**
(21) Numéro de dépôt: 15726940.8
(22) Date de dépôt: 01.06.2015
(51) Int. Cl.: B25J 19/00, B25J 17/00

(54) **DISPOSITIF DE PRÉPOSITIONNEMENT ET DE FIXATION AMOVIBLE DE MEMBRES ARTICULÉS D'UN ROBOT HUMANOÏDE**
VORRICHTUNG ZUR VORPOSITIONIERUNG UND LÖSBAREN BEFESTIGUNG BEWEGLICHER EXTREMITÄTEN EINES HUMANOIDEN ROBOTERS
DEVICE FOR PREPOSITIONING AND REMOVABLY ATTACHING ARTICULATED LIMBS OF A HUMANOID ROBOT

(30) Priorité: 05.06.2014 FR 1455091
(43) Date de publication de la demande: 12.04.2017
(73) Titulaire: Softbank Robotics Europe, 75015 Paris (FR)
(72) Inventeur: HOUCHU, Ludovic, F-78650 Beynes (FR); MUGNIER, Fabien, F-75015 Paris (FR); CLERC, Vincent, F-92140 Clamart (FR)
(74) Mandataire: Collet, Alain
(86) Numéro de dépôt international: PCT/EP2015/062070
(87) Numéro de publication internationale: WO 2015/185474

(56) Documents cités:
- JP-A- 2002 227 829
- JP-A- 2005 161 414
- JP-A- 2006 116 679
- JP-A- 2009 018 418
- US-A1- 2010 152 894
- RT-USA: "NASA unveils 6-foot-tall humanoid robot", , 11 décembre 2013 (2013-12-11), XP055163804, Extrait de l'Internet: URL:http://rt.com/usa/nasa-valkyrie-texas- robot-076/ [extrait le 2015-01-21]

## Description

L'invention concerne le domaine de la robotique mobile. Elle porte sur un dispositif pour prépositionner et fixer de manière amovible des membres articulés d'un robot mobile. Elle porte aussi sur un procédé de maintenance permettant un remplacement simple et rapide d'un membre articulé défaillant par un membre de remplacement.

La robotique humanoïde cherche à rassembler dans une machine le plus grand nombre de caractères s'apparentant à l'être humain. On cherche d'abord à s'approcher de l'humain par l'apparence extérieure, la morphologie ou les mouvements. Le robot humanoïde comprend généralement plusieurs articulations motorisées capables d'entrainer en mouvement, au moyen d'un moteur électrique, un membre par rapport à un autre. Les robots humanoïdes les plus évolués comprennent ainsi des jambes, des bras ou des mains. Ils sont capables de marcher ou de danser à la manière d'un être humain. Ils sont capables de manipuler dans leurs mains des objets de formes variés. On cherche aussi à s'approcher de l'humain par son comportement et son intelligence. L'intelligence artificielle des robots est de plus en plus aboutie, permettant une interaction de plus en plus complexe avec un utilisateur humain.

Les applications possibles des robots humanoïdes sont multiples. On a envisagé des applications dans le domaine industriel, par exemple pour accéder à des zones contaminées présentant un risque pour l'homme. On envisage aussi de nombreuses applications dans le domaine de la santé, par exemple pour l'assistance à des personnes présentant une déficience. On envisage également une utilisation par un plus large public à des fins domestiques.

L'hypothèse d'un déploiement à grande échelle et destiné au plus large public génère des contraintes nouvelles, par exemple industrielles, réglementaires ou de sûreté. La conception des générations les plus récentes de robots intègre d'ores et déjà un ensemble de contraintes pour répondre à des réglementations émergentes. Par exemple, le robot destiné au grand public ne doit présenter aucun risque de sécurité, tant dans le cas d'un fonctionnement normal que dans le cas d'une défaillance. Des opérations de maintenance doivent pouvoir être réalisées, par un opérateur expérimenté ou par un simple utilisateur. On cherche à prendre en compte dans la conception du robot des contraintes liées à l'après-vente, par exemple pour permettre un diagnostique aisé et une réparabilité simple et

Il est déjà connu dans l'état de la technique de pouvoir facilement remplacer les membres d'une figurine anthropomorphique, comme le montre le document JP 2002 227829 A. Cependant, dans ce document, les membres de la figurine ne comprennent pas d'articulations motorisées.

A cet effet, l'invention a pour objet un robot mobile comprenant un tronc et plusieurs membres reliés au tronc de manière amovible, caractérisé en ce qu'il comprend :
- pour chacun des membres, des moyens pour prépositionner ledit membre sur le tronc, et
- une unique bride reliée au tronc et configurée pour fixer de manière amovible l'ensemble des membres au tronc.
Selon l'invention, chacun des membres comprend en outre une articulation motorisée, par l'intermédiaire de laquelle ledit membre est positionné et fixé sur le tronc, et peut être entrainé en mouvement par rapport au tronc.

Avantageusement, les moyens de prépositionnement associés à l'un des membres comprennent une empreinte aménagée dans le tronc configurée pour recevoir l'articulation motorisée dudit membre, et des moyens pour clipser l'articulation motorisée dans l'empreinte, de manière à positionner et maintenir ledit membre par rapport au tronc en exerçant un effort supérieur à un effort exercé par gravité entre le tronc et ledit membre.

Avantageusement, les moyens de clipsage d'un des membres comprennent un ensemble de nervures aménagées dans l'articulation motorisée coopérant avec un ensemble de rails aménagés dans l'empreinte associée audit membre.

Avantageusement, la bride est mobile par rapport au tronc entre une position ouverte permettant pour chacun des membres de positionner et retirer l'articulation motorisée par rapport au tronc, et une position fermée dans laquelle la bride vient en appui contre les articulations motorisées de tous les membres ; le robot comprenant des moyens de fixation amovible pour maintenir la bride en position fermée.

Avantageusement, la bride est reliée au tronc par une liaison pivot configurée pour permettre de déplacer la bride en rotation, entre la position ouverte et la position fermée, et configurée de manière à ce que la bride soit maintenue en position ouverte par effet de la gravité.

Avantageusement, le robot comprend pour un des membres, un premier et un second ensembles de cales souples, solidaires respectivement de la bride et de l'empreinte associée audit membre, configurées pour être écrasées en assurant le maintien de l'articulation motorisée positionnée et fixée sur le tronc.

Avantageusement, les cales souples sont constituées d'une mousse élastomère.

Avantageusement, le robot comprend pour chacun des membres, des moyens de connexion électronique amovible.

Avantageusement, l'articulation de l'un des membres est motorisée autour de deux ou trois axes de rotation.

Avantageusement, le robot comprend trois membres, l'un des membres articulé autour de trois axes de rotation par rapport au tronc s'apparentant à une tête, et deux des membres articulés autour de deux axes de rotation par rapport au tronc et disposés de part et d'autre du tronc s'apparentant à deux bras.

L'invention porte aussi sur un procédé de remplacement d'un membre défaillant d'un robot présentant les caractéristiques précédemment décrites par un membre non défaillant, en particulier l'empreinte et les moyens de fixation amovible, le procédé comprenant des étapes consistant à :
- retirer les moyens de fixation amovible,
- déplacer la bride en position ouverte,
- retirer le membre défaillant,
- prépositionner le membre non défaillant dans l'empreinte (32) associée au membre défaillant,
- déplacer la bride en position fermée,
- remonter les moyens de fixation.

Avantageusement, le procédé comprend en outre des étapes consistant respectivement à déconnecter et connecter les moyens de connexion électronique entre le robot et respectivement le membre défaillant et le membre non défaillant.

L'invention sera mieux comprise et d'autres avantages apparaîtront à la lecture de la description détaillée d'un mode de réalisation donné à titre d'exemple sur les figures suivantes.
Les figures 1a et 1b représentent deux exemples de robots humanoïdes pouvant être équipés d'un dispositif de prépositionnement et de fixation selon l'invention,
les figures 2a, 2b et 2c représentent un exemple de robot selon l'invention comprenant un tronc et plusieurs membres articulés fixés sur le tronc au moyen d'une bride représentée dans trois positions distinctes,
les figures 3a et 3b représentent selon deux vues en perspective le tronc et la bride en position ouverte,
les figures 4a et 4b représentent des moyens de prépositionnement et de fixation des membres articulés sur le tronc du robot.

Par souci de clarté, les mêmes éléments porteront les mêmes repères dans les différentes figures.

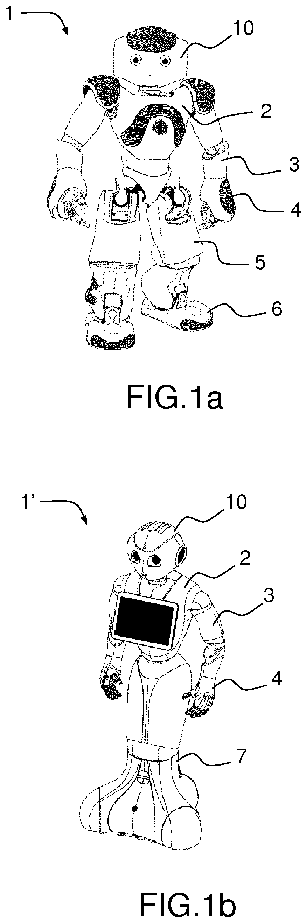

Les **figures 1a et 1b** représentent deux exemples de robots humanoïdes développés par la société ALDEBARAN ROBOTICS™. Le robot humanoïde 10 représenté en figure 1a comprend une tête 1, un torse 2, deux bras 3, deux mains 4, deux jambes 5 et deux pieds 6. Le robot humanoïde 10' représenté en figure 1b comprend une tête 1, un torse 2, deux bras 3, deux mains 4 et une jupe 7. Ces deux robots comprennent plusieurs articulations autorisant le mouvement relatif des différents membres du robot dans le but de reproduire la morphologie humaine et ses mouvements. Les robots 10 et 10' comprennent par exemple une articulation 11 entre le torse 2 et chacun des bras 3. L'articulation 11 est motorisée autour de deux axes de rotation pour permettre de déplacer le bras 3 par rapport au torse 2 à la manière des déplacements possibles par une épaule d'un être humain.

Le robot humanoïde 10 comprend également plusieurs articulations pour mettre en mouvement les jambes du robot et reproduire le mouvement de la marche, en particulier des articulations assimilables à une hanche, entre le torse et la cuisse, à un genou, entre la cuisse et la jambe, et à une cheville entre la jambe et le pied. Plusieurs formes d'articulations motorisées sont mises en oeuvre, entrainant en mouvement l'un des membres autour d'un ou plusieurs degrés de liberté en rotation.

Le robot humanoïde 10' présente une architecture différente. Pour améliorer la stabilité et abaisser le centre de gravité du robot, le robot ne comprend pas de jambe mais une jupe 7 comprenant en sa base un tripode capable de déplacer le robot. La jupe comprend aussi une première articulation 12 s'apparentant à un genou, entre une jambe 7a et une cuisse 7b. Une deuxième articulation 13 s'apparentant à une hanche est montée entre le torse 2 et la cuisse 7b. Ces deux articulations 12 et 13 sont des liaisons pivots motorisées autour d'un axe de rotation. L'axe de rotation Xa de l'articulation 12 et l'axe de rotation Xb de l'articulation 13 sont sensiblement parallèles à un axe reliant les deux épaules du robot, permettant d'incliner le robot vers l'avant ou vers l'arrière.

L'idée générale de la présente invention consiste à relier plusieurs membres au torse du robot de manière amovible, au moyen d'un dispositif permettant de prépositionner chacun des membres et de fixer les membres à l'aide d'une bride unique. L'ouverture de la bride permet d'accéder rapidement aux articulations des membres. Le dispositif permet une opération de remplacement aisé d'un membre défaillant.

L'invention est décrite dans la suite pour un robot humanoïde comprenant deux bras articulés autour de deux axes de rotation par rapport au torse et une tête articulée autour de trois axes de rotation. Il est bien entendu que l'invention ne se limite pas à cet exemple particulier. Plus généralement, le dispositif selon l'invention peut être appliqué à un robot comprenant plusieurs membres articulés par rapport à un tronc. Le robot peut être un robot à caractère humanoïde ou un robot à caractère animal, rassemblés sous la dénomination générale de robot mobile. Les membres articulés sont d'une manière générale des sous-ensembles mécaniques que l'on cherche à déplacer l'un par rapport à l'autre ou par rapport à un tronc. Par membre, on entend dans la suite un sous-ensemble mécanique du robot s'apparentant par exemple à une jambe, une cuisse, un torse, une tête, un bras, une main, ou une combinaison de ceux-ci. Notons encore que si les figures suivantes détaillent un exemple particulier d'une articulation motorisée autour de deux ou trois degrés de liberté, il est entendu que l'invention s'applique en principe à tout type d'articulations, par exemple une articulation à un, deux ou trois degrés de liberté en rotation, ou encore une articulation à un ou plusieurs degrés de liberté en translation. Le moteur est préférentiellement un moteur électrique. D'autres moteurs peuvent être envisagés sans sortir du cadre de l'invention, par exemple un moteur thermique, hydraulique, ou encore à air comprimé. Dans l'exemple, le dispositif permet de prépositionner et fixer trois membres, s'apparentant à deux bras et une tête. Le dispositif n'inclut pas de membre inférieur tel que des jambes ou une jupe. Cette sélection de trois membres est un cas particulier et l'invention couvre toute sélection de plusieurs membres d'un robot.

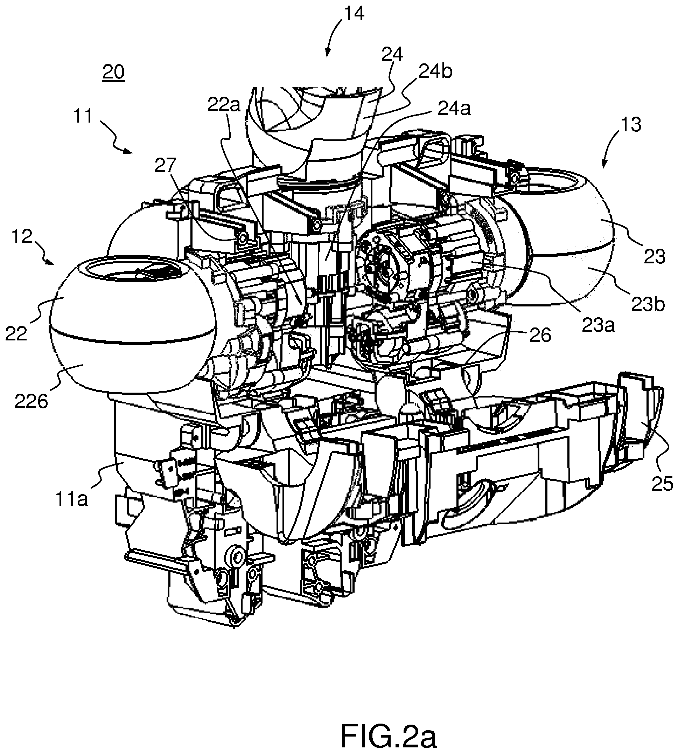

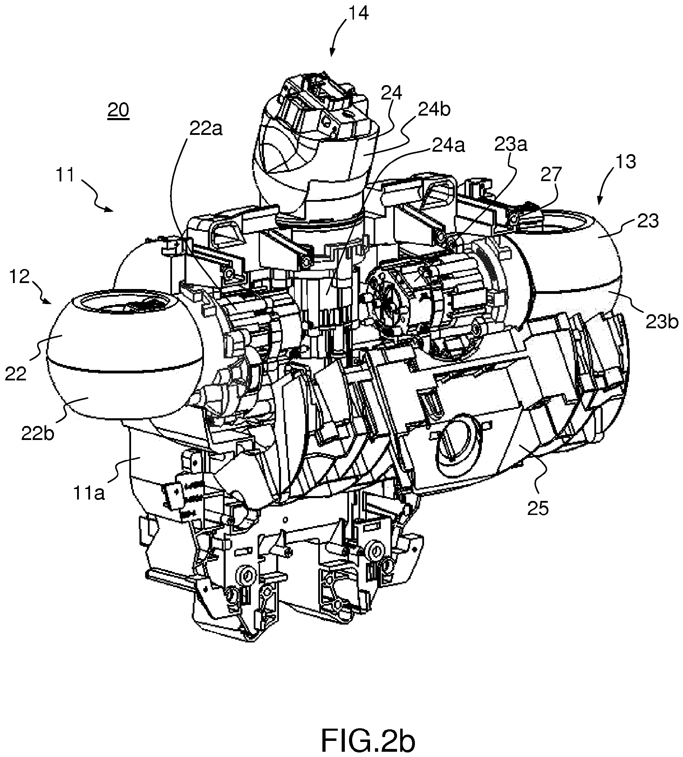

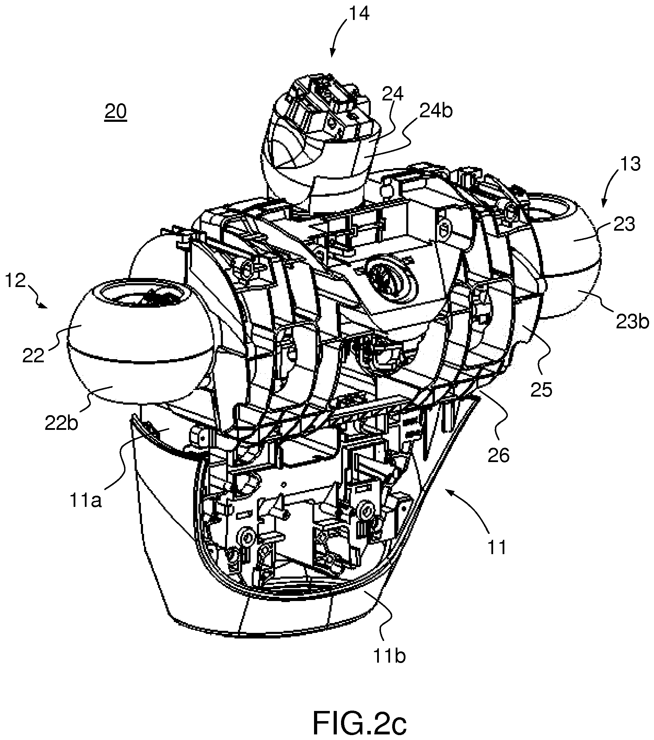

Les **figures 2a****,** **2b** **et** **2c** représentent un exemple de robot selon l'invention comprenant un torse et plusieurs membres articulés fixés sur le tronc au moyen d'une bride représentée dans trois positions distinctes. Dans la suite de la description, le tronc est dénommé torse par analogie avec la morphologie humaine. Le robot 20 comprend un torse 11 et trois membres 12, 13 et 14. Chacun des membres est relié au torse 11 respectivement par l'intermédiaire d'une articulation motorisée 22, 23 et 24. Pour simplifier la lecture des dessins, seule l'articulation motorisée des membres est représentée. Une illustration de la forme possible des membres peut être déduite des figures 1a et 1b déjà présentées. Sur les figures 2a à 2c, le robot est représenté de dos et en position debout. Par leur implantation et leurs mouvements par rapport au torse, les membres 12, 13 et 14 s'apparentent respectivement à un bras gauche, un bras droit et une tête. Le robot peut aussi comprendre un ou plusieurs des membres inférieurs non représentés sur les figures 2a à 2c, qui peuvent être similaires à ceux représentés sur les figures 1a et 1b.

Le torse 11 du robot 20 comprend une structure porteuse alvéolaire 11a et une coque extérieure 11b. La structure porteuse 11a est préférentiellement constituée d'un matériau thermoplastique rigide. Divers équipements peuvent être fixés sur la structure 11a tels que par exemple des modules électroniques ou des batteries de stockage.

Les articulations 22 et 23 des bras 12 et 13 sont deux liaisons motorisées autour de deux axes de rotation. L'articulation motorisée 22 comprend une partie fixe 22a destinée à être fixée sur le torse 11, et une partie mobile 22b entrainant en mouvement le bras 12 par rapport au torse. De même, l'articulation motorisée 23 comprend une partie fixe 23a fixée sur le torse 11, et une partie mobile 23b entrainant en mouvement le bras 13. L'articulation 24 de la tête 14 est une liaison motorisée autour de trois axes de rotation. L'articulation 24 comprend une partie fixe 24a et une partie mobile 24b.

Selon un aspect de l'invention, le robot comprend un dispositif de prépositionnement et de fixation amovible des membres 12, 13 et 14 sur le torse 11. Le dispositif comprend :
- pour chacun des membres 12, 13 et 14, des moyens pour prépositionner ledit membre sur le tronc 11, et
- une unique bride 25 reliée au tronc 11 et configurée pour fixer de manière amovible l'ensemble des membres au tronc 11.

La bride 25 est mobile par rapport au torse 11 entre une position ouverte représentée sur la figure 2a et une position fermée représentée sur la figure 2c. La figure 2b représente la bride dans une position intermédiaire à la position ouverte et à la position fermée. La bride 25 est reliée au torse 11 au moyen d'une liaison pivot 26 d'axe horizontal. La liaison pivot 26 est disposée en partie inférieure de la bride et configurée de sorte que la position ouverte de la bride est stable par effet de la gravité, ou autrement dit de sorte que la bride est maintenue en position ouverte par effet de la gravité. La position ouverte de la bride représentée sur la figure 2a est configurée pour permettre à un opérateur du robot d'accéder aux articulations des membres, et de monter et démonter chacun des membres.

La bride peut être maintenue en position fermée par des moyens de fixation amovible. Dans l'exemple représenté, le maintien en position fermée est assurée par quatre vis (non représentées) traversant une partie supérieure de la bride et coopérant avec quatre écrous 27, aménagés sur le torse, et répartis le long d'un axe horizontal. En position fermée représentée sur la figure 2c, la bride 25 vient en appui contre les articulations motorisées, de sorte à en assurer simultanément la fixation de l'ensemble des membres par rapport au torse.

De manière avantageuse, la bride comprend une structure alvéolaire constituée d'un matériau thermoplastique rigide similaire à celui de la structure porteuse du torse.

Notons que la figure 2c représente une coque extérieure 11b recouvrant partiellement le torse 11. Il est envisagé une coque extérieure recouvrant entièrement le torse 11. Il est aussi envisagé de recouvrir la bride 25 d'une coque extérieure. Les coques extérieures comprennent avantageusement un traitement de surface conférant un aspect esthétique au tronc du robot.

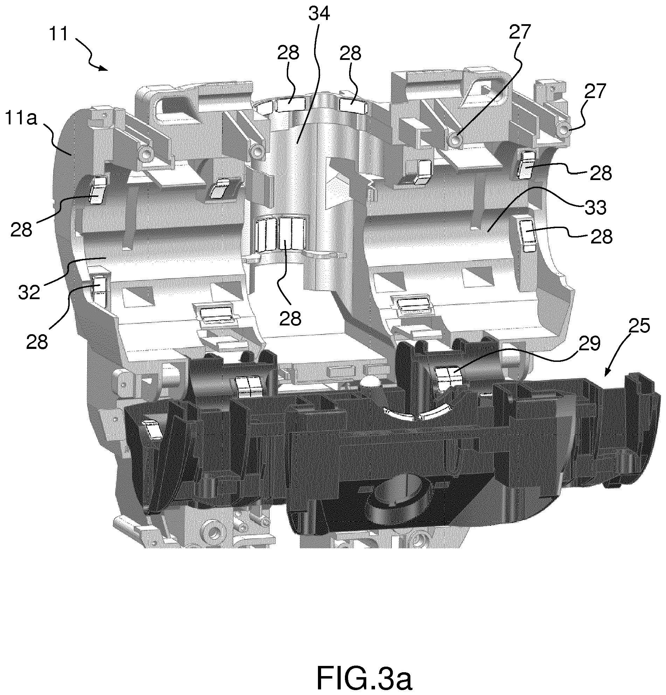

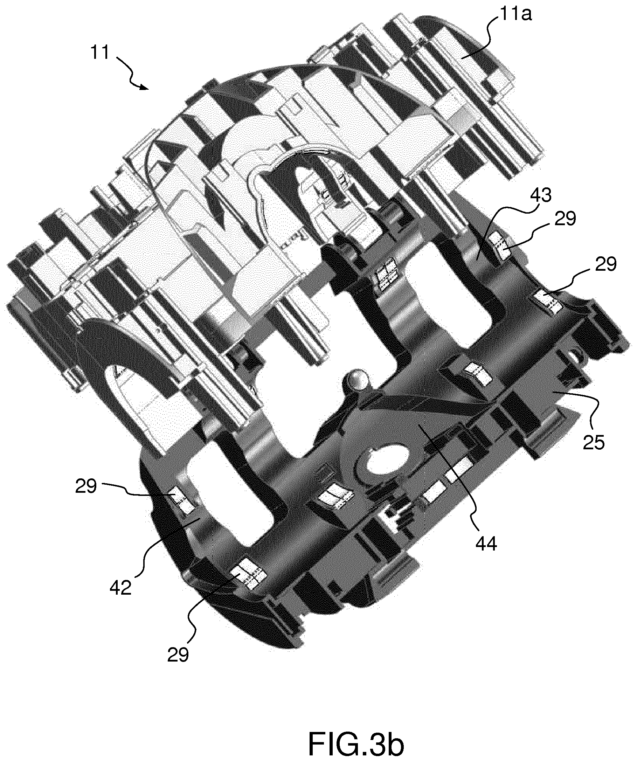

Les **figures 3a** **et** **3b** représentent selon deux vues en perspective le tronc et la bride en position ouverte. Le dispositif assure le prépositionnement et la fixation des membres par l'intermédiaire de leur articulation motorisée. A chacun des membres 12, 13 et 14 est associée une empreinte aménagée dans le torse 11, respectivement référencées 32, 33 et 34. Chacune des empreintes est configurée pour recevoir l'articulation motorisée du membre associé. Ainsi, l'empreinte 32 de forme sensiblement semi-tubulaire est configurée pour recevoir la partie fixe 22b de forme sensiblement cylindrique de l'articulation motorisée 22.

De la même manière, une empreinte associée à chacun des membres est aménagée dans la bride. La bride 25 comprend trois empreintes 42, 43 et 44 associées respectivement aux membres 12, 13 et 14. Chacune des empreintes, de forme sensiblement semi-tubulaire, est destinée à venir épouser, lorsque la bride est en position fermée, la forme sensiblement cylindrique de la partie fixe des articulations de chacun des membres.

Le dispositif de prépositionnement et de fixation amovible comprend aussi un premier ensemble de cales souples 28 solidaires du torse et positionnés dans les empreintes 32, 33 et 34 du torse de manière à venir s'intercaler entre la structure porteuse rigide et la partie fixe de l'articulation motorisée des membres. Le dispositif comprend aussi un second ensemble de cales souples 29 solidaires de la bride, positionnés notamment dans les empreintes 42, 43 et 44 de la bride de manière à venir s'intercaler, lorsque la bride est en position fermée, entre la bride et la partie fixe de l'articulation motorisée des membres.

Dans une mise en oeuvre privilégiée de l'invention, les cales souples 28 et 29 sont constituées d'un matériau en mousse élastomère. Ainsi, les cales souples sont avantageusement configurées pour être partiellement écrasées lorsque la bride est en position fermée de manière à assurer un maintien équilibré et non hyperstatique de l'articulation motorisée de chacun des membres par rapport au torse.

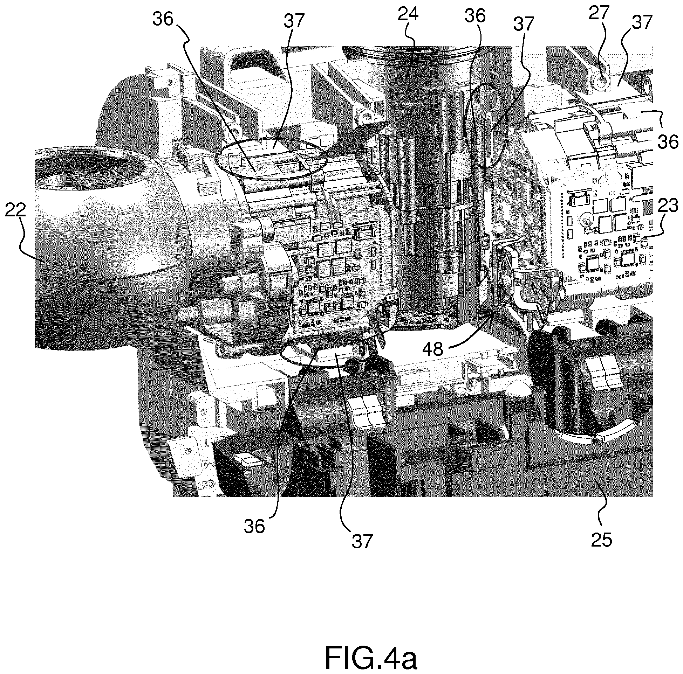

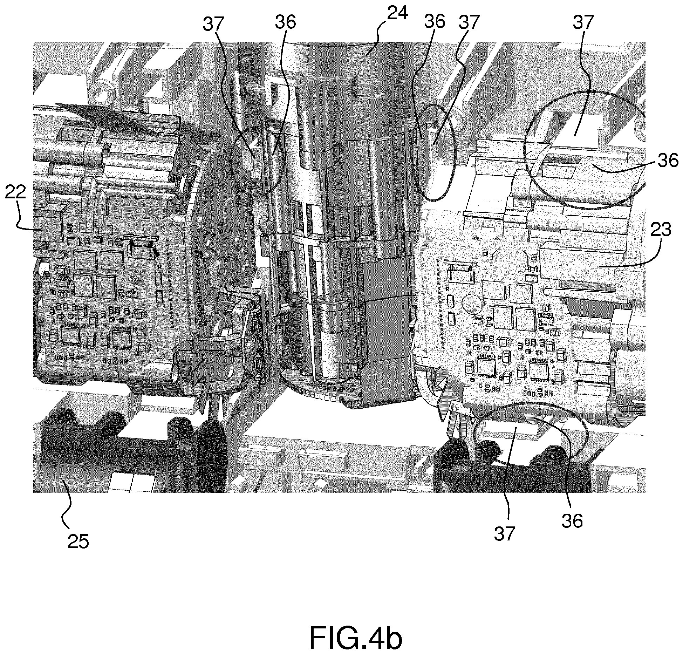

Les **figures 4a** **et** **4b** détaillent les moyens de prépositionnement et de fixation amovible des membres articulés sur le tronc du robot. Selon un aspect avantageux de l'invention, le dispositif comprend des moyens de prépositionnement associés à chacun des membres et des moyens de fixation amovible capables de fixer au moyen d'une unique bride l'ensemble des membres. Pour chacun des membres, les moyens de prépositionnement comprennent d'une part l'empreinte aménagée dans le torse associée audit membre, telle que précédemment décrite au moyen des références 32, 33 et 34. Ils comprennent d'autre part des moyens pour clipser l'articulation motorisée dans l'empreinte de manière à positionner et maintenir ledit membre par rapport au tronc. Divers modes de réalisation des moyens de clipsage peuvent être envisagés sans sortir du cadre de l'invention. Dans l'exemple représenté sur les figures, le clipsage est réalisé au moyen d'un ensemble de nervures longitudinales 36 aménagés sur la partie fixe cylindrique de l'articulation, destinés à venir en contact d'un ensemble de rails 37 aménagés dans la structure du torse à proximité de l'empreinte. Lors du montage de l'articulation, la partie fixe est d'abord placée en regard de l'empreinte, puis est clipsée en venant appuyer la partie fixe contre l'empreinte du torse. L'effort exercé par un opérateur sur la partie fixe permet, par déformation élastique de la structure du torse, de déplacer les rails 37 jusqu'à ce qu'ils permettent le passage des nervures 36. Après passage de la nervure, le rail revient en position. La partie fixe est alors maintenue dans l'empreinte du torse, en appui contre les cales souples, par l'ensemble de nervures et de rails. Lors du démontage de l'articulation, un opérateur vient exercer un effort contre un des rails 37 de manière à permettre de sortir l'articulation de l'empreinte du torse. Les moyens de prépositionnement peuvent être avantageusement configurés de manière à exercer un effort, entre l'articulation et le torse, supérieur à l'effort exercé par la simple gravité entre le torse et le membre. Ainsi, les moyens de clipsage permettent de positionner et de maintenir provisoirement le membre par rapport au torse sans que le membre ne puisse sortir de son logement et chuter par effet de la gravité, sans intervention extérieure volontaire de l'opérateur.

Le dispositif peut aussi comprendre des moyens de connexion électronique amovible entre le torse et au moins un membre. Dans l'exemple représenté, le dispositif comprend des moyens de connexion amovible entre le torse et chacun des membres. Les moyens de connexion électronique sont configurés pour permettre l'alimentation électrique et le pilotage électronique de l'articulation motorisée et/ou d'autres dispositifs électriques, comme des capteurs (microphone, capteur optique, etc...) ou des actionneurs (articulations du coude, de la main, etc...). De manière avantageuse, le dispositif peut être configuré de sorte que le clipsage du membre permet à la fois de prépositionner le membre et connecter le membre au torse. Le déclipsage du membre assurant également la déconnexion des moyens de connexion électronique amovible. Des moyens de connexion électronique amovible 48 sont représentés sur la figure 4a.

L'invention porte sur le dispositif de prépositionnement et de fixation amovible des membres par rapport au tronc du robot. Elle porte aussi sur un robot équipé d'un tel dispositif de prépositionnement et de fixation. L'invention porte également sur le procédé de montage et de démontage des membres d'un tel robot. L'opération de montage d'un membre d'un robot muni du dispositif de prépositionnement et de fixation comprend alors des étapes consistant à :
- prépositionner le membre par rapport au torse à l'aide des moyens de prépositionnement ; cette étape comprenant des sous-étapes consistant à :
   ∘ introduire la partie fixe de l'articulation du membre dans le torse et la placer en regard de l'empreinte associée dans le torse,
   ∘ clipser la partie fixe dans l'empreinte sur le torse de sorte à prépositionner le membre par rapport au torse,
- fixer le membre sur le torse à l'aide des moyens de fixation amovible ; cette étape comprenant des sous-étapes consistant à :
   ∘ déplacer la bride de la position ouverte vers la position fermée,
   ∘ fixer la bride sur le torse à l'aide des moyens de fixation amovible ; la partie fixe de l'articulation étant maintenue en position par rapport au torse au moyen de la bride venant écraser partiellement les cales souples fixées sur le torse et sur la bride.

Par un procédé inverse, l'opération de démontage d'un membre d'un robot muni du dispositif de prépositionnement et de fixation comprend des étapes consistant à :
- retirer les moyens de fixation de la bride,
- déplacer la bride de la position fermée à la position ouverte,
- déclipser la partie fixe de l'articulation motorisée dudit membre en imposant un effort supérieur à l'effort de clipsage,
- retirer la partie fixe de l'articulation motorisée hors de l'empreinte du torse.

L'invention porte enfin sur un procédé de maintenance d'un robot, ou plus précisément sur un procédé de remplacement d'un membre défaillant d'un robot muni d'un dispositif de prépositionnement et de fixation amovible par un membre non défaillant. Le procédé de remplacement comprend des étapes consistant à :
- retirer les moyens de fixation amovible,
- déplacer la bride de la position fermée à la position ouverte,
- retirer ledit membre défaillant,
- prépositionner ledit membre non défaillant dans l'empreinte associée au membre à remplacer,
- déplacer la bride en position fermée,
- remonter les moyens de fixation.

Notons que lorsque le dispositif comprend des moyens de connexion électronique amovible, le procédé de remplacement d'un membre défaillant comprend en outre une étape consistant à déconnecter les moyens de connexion électronique amovible, entre le torse et le membre défaillant - cette étape étant réalisée avant ou simultanément à l'étape de retrait du membre défaillant - et une étape consistant à connecter les moyens de connexion électronique amovible, entre le torse et le membre non défaillant - cette étape étant réalisée avant ou simultanément à l'étape de prépositionnement du membre non défaillant.

## Revendications

1. Robot mobile comprenant un tronc (11) et plusieurs membres (12, 13, 14) reliés au tronc (11) de manière amovible, **caractérisé en ce qu'**il comprend :
• pour chacun des membres (12), des moyens (32, 28, 36, 37) pour prépositionner ledit membre (12) sur le tronc (11), et
• une unique bride (25) reliée au tronc (11) et configurée pour fixer de manière amovible l'ensemble des membres (12, 13, 14) au tronc (11)
• et **en ce que** chacun des membres (12, 13, 14) comprend une articulation motorisée (22, 23, 24), par l'intermédiaire de laquelle ledit membre (12, 13, 14) est positionné et fixé sur le tronc (11), et peut être entrainé en mouvement par rapport au tronc (11).

2. Robot selon la revendication précédente, dans lequel les moyens de prépositionnement (32, 28, 36, 37) associés à l'un des membres (12) comprennent une empreinte (32) aménagée dans le tronc (11) configurée pour recevoir l'articulation motorisée (22a) dudit membre (12), et des moyens (36, 37) pour clipser l'articulation motorisée (22a) dans l'empreinte (32), de manière à positionner et maintenir ledit membre (12) par rapport au tronc (11) en exerçant un effort supérieur à un effort exercé par gravité entre le tronc (11) et ledit membre (12).

3. Robot selon la revendication 2, dont les moyens de clipsage (32, 28, 36, 37) d'un des membres (12) comprennent un ensemble de nervures (36) aménagées dans l'articulation motorisée (22a) coopérant avec un ensemble de rails (37) aménagés dans l'empreinte (32) associée audit membre (12).

4. Robot selon la revendication 2 ou 3, dont la bride (25) est mobile par rapport au tronc (11) entre une position ouverte permettant pour chacun des membres (12, 13, 14) de positionner et retirer l'articulation motorisée (22, 23, 24) par rapport au tronc (11), et une position fermée dans laquelle la bride (25) vient en appui contre les articulations motorisées (22, 23, 24) de tous les membres (12, 13, 14); le robot comprenant des moyens de fixation amovible (27) pour maintenir la bride (25) en position fermée.

5. Robot selon la revendication 4, dont la bride (25) est reliée au tronc (11) par une liaison pivot (26) configurée pour permettre de déplacer la bride (11) en rotation, entre la position ouverte et la position fermée, et configurée de manière à ce que la bride (25) soit maintenue en position ouverte par effet de la gravité.

6. Robot selon la revendication 4 ou 5, comprenant pour un des membres (12), un premier et un second ensembles de cales souples (29, 28), solidaires respectivement de la bride (25) et de l'empreinte (32) associée audit membre (12), configurées pour être écrasées en assurant le maintien de l'articulation motorisée (22) positionnée et fixée sur le tronc (11).

7. Robot selon la revendication 6, dont les cales souples (28, 29) sont constituées d'une mousse élastomère.

8. Robot selon l'une des revendications précédentes, comprenant pour chacun des membres (12, 13, 14), des moyens de connexion électronique amovible (48).

9. Robot selon l'une des revendications précédentes, dont l'articulation (22) de l'un des membres (12) est motorisée autour de deux ou trois axes de rotation.

10. Robot selon l'une des revendications précédentes, comprenant trois membres (12, 13, 14), l'un des membres (14) articulé autour de trois axes de rotation par rapport au tronc (11) s'apparentant à une tête, et deux des membres (12, 13) articulés autour de deux axes de rotation par rapport au tronc (11) et disposés de part et d'autre du tronc (11) s'apparentant à deux bras.

11. Procédé de remplacement d'un membre défaillant d'un robot selon la revendication 4 par un membre non défaillant, **caractérisé en ce qu'**il comprend des étapes consistant à :
- retirer les moyens de fixation amovible (27),
- déplacer la bride (25) en position ouverte,
- retirer le membre défaillant,
- prépositionner le membre non défaillant dans l'empreinte (32) associée au membre défaillant,
- déplacer la bride (25) en position fermée,
- remonter les moyens de fixation (27).

12. Procédé selon la revendication 11, pour un robot selon la revendication 8, comprenant en outre des étapes consistant respectivement à déconnecter et connecter les moyens de connexion électronique (48) entre le robot et respectivement le membre défaillant et le membre non défaillant.

## Patentansprüche

1. Beweglicher Roboter, umfassend einen Rumpf (11) und mehrere Glieder (12, 13, 14), welche abnehmbar mit dem Rumpf (11) verbunden sind, **dadurch gekennzeichnet, dass** er Folgendes umfasst:
• für jedes der Glieder (12), Mittel (32, 28, 36, 37) zum Vorpositionieren des Gliedes (12) am Rumpf (11), und
• einen einzigen Flansch (25), verbunden mit dem Rumpf (11) und konfiguriert zum abnehmbaren Befestigen sämtlicher Glieder (12, 13, 14) am Rumpf (11)
• und dadurch, dass jedes der Glieder (12, 13, 14) ein angetriebenes Gelenk (22, 23, 24) umfasst, mit dessen Vermittlung das Glied (12, 13, 14) am Rumpf (11) positioniert und befestigt wird und in Bezug auf den Rumpf (11) beweglich angetrieben werden kann.

2. Roboter nach dem vorherigen Anspruch, bei welchem die Mittel zum Vorpositionieren (32, 28, 36, 37), welche zu einem der Glieder (12) dazugehören, einen im Rumpf (11) gebildeten Abdruck (32) beinhalten, welcher konfiguriert ist, um das angetriebene Gelenk (22a) des Gliedes (12) aufzunehmen, und Mittel (36, 37) zur Clipverbindung des angetriebenen Gelenks (22a) im Abdruck (32) in der Weise, dass das Glied (12) in Bezug auf den Rumpf (11) positioniert und gehalten wird, indem eine höhere Kraft ausgeübt wird als jene, die durch Schwerkraft zwischen dem Rumpf (11) und dem Glied (12) ausgeübt wird.

3. Roboter nach Anspruch 2, bei welchem die Mittel zur Clipverbindung (32, 28, 36, 37) eines der Glieder (12) eine Reihe von Rippen (36) umfassen, welche in dem angetriebenen Gelenk (22a) gebildet sind und welche mit einer Reihe von Schienen (37) zusammenarbeiten, welche im Abdruck (32) gebildet sind, welcher zum Glied (12) dazugehört.

4. Roboter nach Anspruch 2 oder 3, dessen Flansch (25) in Bezug auf den Rumpf (11) beweglich ist zwischen einer geöffneten Position, welche es für jedes der Glieder (12, 13, 14) ermöglicht, das angetriebene Gelenk (22, 23, 24) in Bezug auf den Rumpf (11) zu positionieren und zu entfernen, und einer geschlossenen Position, in welcher der Flansch (25) an den angetriebenen Gelenken (22, 23, 24) aller Glieder (12, 13, 14) anzuliegen kommt; wobei der Roboter Mittel zur abnehmbaren Befestigung (27) umfasst, um den Flansch (25) in geschlossener Position zu halten.

5. Roboter nach Anspruch 4, dessen Flansch (25) mit dem Rumpf (11) über eine Schwenkverbindung (26) verbunden ist, konfiguriert, um die Bewegung des Flanschs (11) in Rotation zwischen der geöffneten Position und der geschlossenen Position zu ermöglichen, und so konfiguriert, dass der Flansch (25) durch die Wirkung der Schwerkraft in geöffneter Position gehalten wird.

6. Roboter nach Anspruch 4 oder 5, umfassend für eines der Glieder (12) einen ersten und einen zweiten Satz flexible Unterlegkeile (29, 28), welche jeweils fest mit dem Flansch (25) und dem Abdruck (32), welcher zum Glied (12) dazugehört, verbunden sind, konfiguriert, um gequetscht zu werden, indem sie den Halt des angetriebenen Gelenks (22) gewährleisteten, welches am Rumpf (11) positioniert und befestigt ist.

7. Roboter nach Anspruch 6, dessen flexible Unterlegkeile (28, 29) aus einem Elastomerschaum gebildet sind.

8. Roboter nach einem der vorhergehenden Ansprüche, umfassend, für jedes der Glieder (12, 13, 14), Mittel zum abnehmbaren elektronischen Anschluss (48).

9. Roboter nach einem der vorhergehenden Ansprüche, wobei das Gelenk (22) eines der Glieder (12) um zwei oder drei Drehachsen angetrieben wird.

10. Roboter nach einem der vorhergehenden Ansprüche, umfassend drei Glieder (12, 13, 14), wobei eines der um drei Drehachsen in Bezug auf den Rumpf (11) artikulierten Glieder (14) einem Kopf ähnelt, und zwei der Glieder (12, 13), welche um zwei Drehachsen in Bezug auf den Rumpf (11) artikuliert und beidseits des Rumpfs (11) angeordnet sind, zwei Armen ähneln.

11. Verfahren zum Austauschen eines fehlerhaften Gliedes eines Roboters nach Anspruch 4 durch ein nicht fehlerhaftes Glied, **dadurch gekennzeichnet, dass** es folgende Schritte umfasst:
- Entfernen der abnehmbaren Befestigungsmittel (27),
- Bewegen des Flanschs (25) in die geöffnete Position,
- Entfernen des fehlerhaften Gliedes,
- Vorpositionieren des nicht fehlerhaften Gliedes im Abdruck (32), welcher zu dem fehlerhaften Glied dazugehört,
- Bewegen des Flanschs (25) in die geschlossene Position,
- Wiedereinbau der Befestigungsmittel (27).

12. Verfahren nach Anspruch 11, für einen Roboter nach Anspruch 8, umfassend zudem Schritte, jeweils bestehend im Abklemmen und Anschließen der elektronischen Anschlussmittel (48) zwischen dem Roboter und dem jeweils fehlerhaften und nicht fehlerhaften Glied.

## Claims

1. A mobile robot comprising a trunk (11) and several limbs (12, 13, 14) removably linked to the trunk (11), **characterized in that** it comprises:
• for each of the limbs (12), means (32, 28, 36, 37) for prepositioning said limb (12) on the trunk (11), and
• a single flange (25) linked to the trunk (11) and configured to removably fix all the limbs (12, 13, 14) to the trunk (11),
• and **in that** each of the limbs (12, 13, 14) comprises a motorized articulation (22, 23, 24), via which said limb (12, 13, 14) is positioned and fixed onto the trunk (11), and can be driven in movement relative to the trunk (11).

2. The robot as claimed in the preceding claim, in which the prepositioning means (32, 28, 36, 37) associated with one of the limbs (12) comprise an imprint (32) formed in the trunk (11) configured to receive the motorized articulation (22a) of said limb (12), and means (36, 37) for clipping the motorized articulation (22a) in the imprint (32), so as to position and hold said limb (12) relative to the trunk (11) by exerting a force greater than a force exerted by gravity between the trunk (11) and said limb (12).

3. The robot as claimed in claim 2, of which the clipping means (32, 28, 36, 37) of one of the limbs (12) comprise a set of ridges (36) formed in the motorized articulation (22a) cooperating with a set of rails (37) formed in the imprint (32) associated with said limb (12).

4. The robot as claimed in claim 2 or 3, of which the flange (25) is mobile relative to the trunk (11) between an open position making it possible, for each of the limbs (12, 13, 14), to position and remove the motorized articulation (22, 23, 24) relative to the trunk (11), and a closed position in which the flange (25) comes to bear against the motorized articulations (22, 23, 24) of all the limbs (12, 13, 14); the robot comprising removable fixing means (27) for holding the flange (25) in the closed position.

5. The robot as claimed in claim 4, of which the flange (25) is linked to the trunk (11) by a pivot link (26) configured to make it possible to displace the flange (11) in rotation, between the open position and the closed position, and configured so that the flange (25) is held in the open position by the effect of gravity.

6. The robot as claimed in claim 4 or 5, comprising, for one of the limbs (12), a first and a second set of flexible shims (29, 28), secured respectively to the flange (25) and the imprint (32) associated with said limb (12), configured to be crushed, ensuring that the motorized articulation (22) is kept positioned and fixed onto the trunk (11).

7. The robot as claimed in claim 6, of which the flexible shims (28, 29) are made of an elastomer foam.

8. The robot as claimed in one of the preceding claims, comprising, for each of the limbs (12, 13, 14), removable electronic connection means (48).

9. The robot as claimed in one of the preceding claims, of which the articulation (22) of one of the limbs (12) is motorized about two or three axes of rotation.

10. The robot as claimed in one of the preceding claims, comprising three limbs (12, 13, 14), one of the limbs (14) articulated about three axes of rotation relative to the trunk (11) being like a head, and two of the limbs (12, 13) articulated about two axes of rotation relative to the trunk (11) and arranged on either side of the trunk (11) being like two arms.

11. A method for replacing a failing limb of a robot as claimed in claim 4 with a non-failing limb, **characterized in that** it comprises steps consisting in:
- removing the removable fixing means (27),
- displacing the flange (25) to the open position,
- removing the failing limb,
- prepositioning the non-failing limb in the imprint (32) associated with the failing limb,
- displacing the flange (25) to the closed position,
- refitting the fixing means (27).

12. The method as claimed in claim 11, for a robot as claimed in claim 8, further comprising steps consisting respectively in disconnecting and connecting the electronic connection means (48) between the robot and respectively the failing limb and the non-failing limb.
